(19) Europäisches Patentamt
European Patent Office
Office européen des brevets

(11) EP 1 298 152 A1

(12) **EUROPEAN PATENT APPLICATION**

(43) Date of publication:
**02.04.2003 Bulletin 2003/14**

(51) Int Cl.$^7$: **C08F 8/30**

(21) Application number: **02011631.5**

(22) Date of filing: **29.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **26.09.2001 JP 2001293605**

(71) Applicant: **KANSAI PAINT CO., LTD.**
**Amagasaki-shi, Hyogo-ken 661-8555 (JP)**

(72) Inventors:
- **Sugishima, Masami**
  **Hiratsuka-shi, Kanagawa-ken (JP)**
- **Numa, Nobushige**
  **Ebina-shi, Kanagawa-ken (JP)**
- **Saikawa, Keiichiro**
  **Hiratsuka-shi, Kanagawa-ken (JP)**
- **Hasegawa, Mitsutaka**
  **Nagoya-shi, Aichi-ken (JP)**
- **Inukai, Hiroshi**
  **Nagoya-shi, Aichi-ken (JP)**

(74) Representative: **Albrecht, Thomas, Dr. et al**
**Kraus & Weisert,**
**Thomas-Wimmer-Ring 15**
**80539 München (DE)**

# (54) Curable resin composition

(57) This invention provides a curable resin composition for one-pack type water-based paint which is readily cured regardless of coating environment, said resin composition characteristically comprising both copolymer (I) which is produced from the emulsion polymerization of 1 to 30 % by weight of maleimide group-containing ethylenically unsaturated monomer (a), 1 to 30 % by weight of carbonyl group-containing ethylenically unsaturated monomer (b), 0.01 to 2 % by weight of compound (c) having two or more polymerizable unsaturated group per molecule and 38 to 97.99 % by weight of another ethylenically unsaturated monomer (d), and compound (II) which has, per molecule, two or more same or different functional groups selected from hydrazide group, semicarbazide group and hydrazone group.

EP 1 298 152 A1

## Description

This invention relates to a curable resin composition, in more detail, to a resin composition for one-pack type water-based paint which is readily cured regardless of coating environment.

In the field of paint, ink and adhesive, organic solvent-based ones have recently been switched over to water-based type ones from the viewpoint of resource saving, environmental sanitation, non-public pollution and non-hazardousness. For example, water-based paint in the field of construction is required to have excellent coating film performances such as room temperature dryability, water resistance, weatherability and stain resistance. Japanese Patent Application Laid-Open No. 249587/1992 discloses, as a resin composition for water-based cold-dryable paint which is suited for construction use, a composition which comprises cross-linkable carbonyl group-containing emulsion particles and a dihydrazide compound.

Said composition excells in storage stability, and is capable of forming a coating film which, after sufficiently dried, exhibits good physical properties such as water resistance. In the initial drying, however, the coating film which is formed from said composition does not show satisfactory water resistance.

As a means to resolve the above-mentioned problem, Japanese Patent Application Laid-Open No. 324720/1998 discloses a carbonyl group-containing copolymer-containing water-based coating composition wherein the interior of emulsion particles have previously been crosslinked to some extent with use of a certain amount of polyvinyl compound as a part of monomeric components. This composition is capable of improving both initial dryability and the water resistance of coating film at the initial stage without affecting mechanical performance. Depending on coating environment, however, crosslinking reaction does not proceed sufficiently. For instance, in the case of paint application under such circumstances as low temperature where moisture evaporation is markedly slow, physical properties of coating film at the time of initial drying is insufficient.

Inventors of this invention have assiduously studied how to resolve the above-mentioned problems of conventional resin composition for cold-dryable one-pack type water-based paint, and have now found out that a resin composition comprising a copolymer which has, as crosslinking functional groups, both carbonyl group and maleimide group, and in which the interior of particles is moderately crosslinked by polymerizable unsaturated group is capable of forming a coating film which is excellent in water-resistance and curability even at an initial stage after applied regardless of coating environment, and, thus, this invention has been completed.

This invention provides a curable resin composition which characteristically comprises both copolymer (I) which is produced from the emulsion polymerization of 1 to 30 % by weight of maleimide group-containing ethylenically unsaturated monomer (a), 1 to 30 % by weight of carbonyl group-containing ethylenically unsaturated monomer (b), 0.01 to 2 % by weight of compound (c) having two or more polymerizable unsaturated group per molecule and 38 to 97.99 % by weight of another ethylenically unsaturated monomer (d), and compound (II) which has, per molecule, two or more same or different functional groups selected from hydrazide group, semicarbazide group and hydrazone group.

The following gives a more detailed explanation of the curable resin composition of this invention.

Incidentally, in the present specification, acryloyl group and methacryloyl group are expressed as (meth)acryloyl group; acrylate and methacrylate are expressed as (math)acrylate; acrylic acid and methacrylic acid are expressed as (meth)acrylic acid; acrolein and methacrolein are expressed as (meth)acrolein; acrylamide and methacrylamide are expressed as (meth)acrylamide; and allyl group and methallyl group are expressed as (meth)allyl group.

### Copolymer (I)

Copolymer (I) is produced from the copolymerization of maleimide group-containing ethylenically unsaturated monomer (a), carbonyl group-containing ethylenically unsaturated monomer (b), compound (c) having two or more polymerizable unsaturated group per molecule and another ethylenically unsaturated monomer (d). Thus, copolymer (I) is a copolymer which contains both maleimide group and carbonyl group in molecule.

Maleimide group-containing ethylenically unsaturated monomer (a) is used for introducing into copolymer (I) a maleimide group which, when irradiated with natural light, is to be optically dimerized to thereby three-dimensionally cross-link a coating film formed from the resin composition of the present invention. Such maleimide group-containing ethylenically unsaturated monomer (a) includes compounds (hereinafter simply referred to as "imide compounds") having an ethylenically unsaturated group and a cyclic imide group of the following Formula (1):

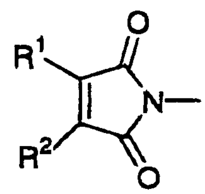

(1)

wherein $R^1$ and $R^2$, taken independently, represent a hydrogen atom or an alkyl group, or, taken together, represent a group forming a carbon ring along with carbon atoms to which they are bonded.

Examples of ethylenically unsaturated group in the above-mentioned imide compound include vinyl group, allyl group and (meth)acryloyl group, among which (meth)acryloyl group is particularly preferred.

From the viewpoint of polymerizability between imide compounds or of copolymerizability with other unsaturated monomers, $R^1$ and $R^2$ in the above Formula (1) are, taken independently, alkyl groups, preferably alkyl groups having at most four carbon atoms, or, taken together, are groups forming a carbon ring, for example $-CH_2CH_2CH_2-$ and $-CH_2CH_2CH_2CH_2-$, preferably $-CH_2CH_2CH_2CH_2-$.

Concrete examples of imide compound include imide (meth)acrylate of the following Formula (2):

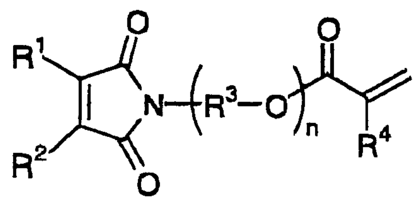

(2)

wherein $R^1$ and $R^2$ mean the same as defined above; $R^3$ represents an alkylene group, preferably an alkylene group having 1 to 6 carbon atoms, more desirably ethylene or propylene group; $R^4$ represents a hydrogen atom or methyl group; and n is an integer of 1 to 6, preferably 1 or 2, more desirably 1.

Compounds of the following Formulas (3) and (4) give examples of the above-mentioned imide (meth)acrylate:

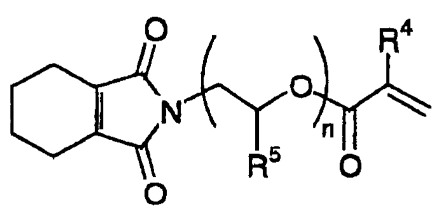

(3)

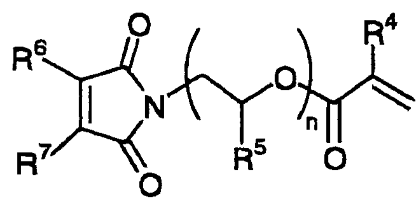

(4)

wherein $R^4$ and $R^5$ represent independently a hydrogen atom or a methyl group; $R^6$ and $R^7$ represent independently an alkyl group having at most four carbon atoms; and n is an integer of 1 to 6.

Imide (meth)acrylate is a known compound, and can be produced from acid anhydride, aminoalcohol and (meth)acrylic acid by such a method as described in Kiyoshi Kato et al., Organic Synthetic Chemistry Association Report, 30 (10), 897, (1972); Javier de Abajo et al., Polymer, vol. 33 (5), 1090, (1992); Japanese Patent Application Laid-Open No. 53119/1981 and Japanese Patent Application Laid-Open No. 242569/1989.

Carbonyl group-containing ethylenically unsaturated monomer (b) is used for introducing into copolymer (I) carbonyl group, which, in its turn, reacts with functional group in compound (II) mentioned later to cause crosslinking,

and thus assists copolymer (I) with the crosslinking of coating film when the above-mentioned photo-crosslinking by maleimide group is insufficient.

Suitably used as said carbonyl group-containing ethylenically unsaturated monomer (b) is a monomer having, per molecule, both at least one carbonyl-containing group, which is selected from aldehyde group and keto group, and a polymerizable double bond. Concrete examples include (meth)acrolein, formylstyrol, vinyl alkyl ketone having 4 to 7 carbon atoms (for example, vinyl methyl ketone, vinyl ethyl ketone and vinyl butyl ketone) and diacetone(meth) acrylamide, among which diacetone (meth)acrylamide is preferred since it is easily available and excellent in reactivity with compound (II) described later.

Compound (c) having two or more polymerizable unsaturated groups per molecule is a monomeric component which serves to crosslink the interior of particles of copolymer (I) produced by emulsion polymerization, and to thus improve the physical properties of formed coating film such as water resistance. Said compound (c) includes compounds which contain, per molecule, 2 to 4, in particular 2, ethylenically unsaturated bond-containing groups such as (meth)acryl group, allyl group and vinyl group. Concrete examples are multi-functional acrylates such as ethylene glycol di(meth)acrylate, triethylene glycol di(meth)acrylate, tetraethylene glycol di(meth)acrylate, 1,3-butylene glycol di(meth)acrylate, trimethylolpropane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tetra(meth)acrylate, glycerol di (meth)acrylate, 1,1,1-tris(hydroxymethyl)ethane di(meth)acrylate, 1,1,1-tris(hydroxymethyl)ethane tri(meth)acrylate and 1,1,1-tris(hydroxymethyl)propane tri(meth)acrylate; allyl compounds such as allyl (meth)acrylate, triallyl isocyanurate and diallyl terephthalate; vinyl group-substituted aromatic compounds such as divinyl benzene, in which 1,6-hexanediol di(meth)acrylate and allyl (meth)acrylate are preferable.

Examples of said another ethylenically unsaturated monomer (d) which is to be copolymerized with the aforementioned maleimide group-containing ethylenically unsaturated monomer (a) and carbonyl group-containing ethylenically unsaturated monomer (b) and compound (c) having two or more polymerizable unsaturated group per molecule include alkyl (meth)acrylates such as methyl (meth)acrylate, ethyl (meth)acrylate, propyl (meth)acrylate, n-butyl (meth) acrylate, isobutyl (meth)acrylate, pentyl (meth)acrylate, hexyl (math)acrylate, 2-ethylhexyl (meth)acrylate, lauryl(meth) acrylate and stearyl (meth)acrylate; alicyclic (meth)acrylates such as cyclohexyl (meth)acrylate and isobornyl (meth) acrylate; aralkyl (meth)acrylates such as benzyl (meth)acrylate; alkoxyalkyl (meth)acrylates such as 2-methoxyethyl (meth)acrylate and 2-ethoxyethyl (meth)acrylate; hydroxyalkyl (meth)acrylates such as hydroxyethyl (meth)acrylate, hydroxypropyl (meth)acrylate and hydroxybutyl (meth)acrylate; perfluoroalkyl (meth)acrylate, glycidyl (meth)acrylate, N,N-diethylaminoethyl (meth)acrylate, (meth)acrylic acid and (meth)acrylonitrile; vinyl ester compounds such as vinyl acetate and vinyl propionate; aromatic vinyl compounds such as styrene and $\alpha$-methylstyrene; and ethylenically unsaturated monomers having an alkoxysilyl group such as vinyl trimethoxy-silane, vinyl triethoxysilane, $\gamma$-methacryloyloxypropyl trimethoxysilane and $\gamma$-methacryloyloxypropyl triethoxysilane, among which alkyl (meth)acrylate having an alkyl group having 1 to 8 carbon atoms, (meth)acrylic acid, styrene and hydroxyalkyl (meth)acrylate having an alkylene group having 2 to 4 carbon atoms are preferred from the viewpoint of copolymerizability, coating film physical properties and particle stability. Cyclohexyl (meth)acrylate is also preferable from the aspect of weatherability.

Copolymer (I) can be produced, for example, by the copolymerization of the above-mentioned components (a) to (d) with use of a polymerization initiator in the presence of a surfactant as emulsifier according to any usual emulsion polymerization method.

In the emulsion polymerization as described above, maleimide group-containing ethylenically unsaturated monomer (a), carbonyl group-containing ethylenically unsaturated monomer (b), compound (c) having two or more polymerizable unsaturated groups per molecule and another ethylenically unsaturated monomer (d) may be used usually in such a proportion that the amount of monomer (a) falls in a range of 1 to 30 % by weight, preferably 5 to 20 % by weight; the amount of monomer (b) falls in a range of 1 to 30 % by weight, preferably 5 to 20 % by weight; the amount of monomer (c) falls in a range of 0.01 to 2 % by weight, preferably 0.5 to 1 % by weight; and the amount of monomer (d) falls in a range of 38 to 97.99 % by weight, preferably 59 to 89.5 % by weight, each based on the total amount of the components (a), (b), (c) and (d).

If the proportion of monomer (a) is less than 1 % by weight, the dryability of coating film which is produced from the resin composition of this invention lowers under circumstances where mositure evaporation is slow, and, thus, effects of photo-curing are hard to be exhibited. If, on the other hand, the proportion of monomer (a) exceeds 30 % by weight, copolymer (I) becomes expensive, and, moreover, the dryability of coating film which is produced from the resin composition with use of copolymer (I) tends to lower under coating environment where light is weak. If the proportion of monomer (b) is less than 1 % by weight, coating film which is formed by indoor-application is hard to show water-resistance. If, on the other hand, the proportion of monomer (b) exceeds 30 % by weight, copolymer (I) becomes expensive, and, moreover, the concentration of hydrophilic group in polymer increases, resulting in low water-resistance contrary to expectation. If the proportion of compound (c) is less than 0.01 % by weight, coating film is apt to exhibit tackiness after initial drying, which results in dirty surface of coating film. If, on the other hand, the proportion of compound (c) exceeds 2 % by weight, the crosslinkage in the interior of particles of copolymer (I) proceeds too much,

making it hard for particles to be coalesced when film is formed, with the result that it may possibly become impossible to form a satisfactory coating film.

As emulsifier (surfactant) for the production of copolymer (I), there is preferably used polyoxyalkylene chain-containing anionic surfactant having a polyoxyalkylene group as a principal chain and having a hydrophobic group at one end and an ion-dissociative group at the other end, from the viewpoint of polymerization stability and storage stability. Examples of said hydrophobic group include alkyl group and aryl group. Said ion-dissociative group is preferably a salt wherein oxyalkylene group is covalently bonded to anion, to which, in turn, cation is ionically bonded. Concrete examples of such an ion-dissociative group include $-SO_3Na$, $-SO_3NH_4$, -COONa, $-COONH_4$, $-PO_3Na_2$ and $-PO_3(NH_4)_2$, among which $-SO_3Na$ and $-SO_3NH_4$ are suitable.

The number of recurring units in polyoxyalkylene group is preferably 300 or less, in particular 5 to 50. Suitably used as alkylene group is ethylene group or propylene group.

Also preferably usable as emulsifier is radically polymerizable surfactant having a polyoxyalkylene group as a principal chain and having a radically polymerizable double bond at one end and an ion-dissociative group at the other end. Radically polymerizable double bond-containing group is exemplified by one which has a structure wherein a portion of hydrophobic group such as aromatic hydrocarbon group, alkyl-substituted aromatic hydrocarbon group, higher alkyl group and alicyclic hydrocarbon group is combined with a radically polymerizable double bond-containing portion such as (meth)allyl, propenyl and butenyl.

Concrete examples of the above-mentioned radically polymerizable surfactant include compounds of the following Formulas:

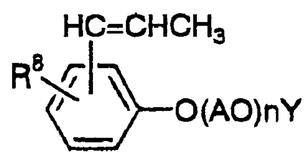

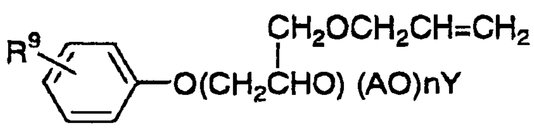

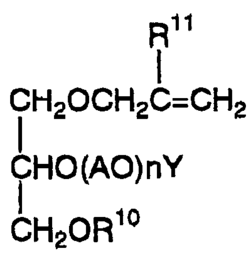

wherein $R^8$ and $R^9$ represent independently a linear or branched alkyl group having 6 to 18, preferably 6 to 16, carbon atoms; $R^{10}$ represents an alkyl group having 8 to 24, preferably 8 to 22, carbon atoms ; $R^{11}$ represents a hydrogen atom or a methyl group; and Y represents the ion-dissociative group described above.

When such a polyoxyalkylene chain-containing surfactant as mentioned above is used as emulsifier, a hydrophilic polyoxyalkylene chain coordinates between the polymer phase of thus formed copolymer particles and an anion in water, and successfully prevents the acceleration of cross-linking on the surface of particles of copolymer during the storage thereof.

In the above-mentioned emulsion polymerization, an anionic or nonionic surfactant which has no polyoxyalkylene chain may be used together with the afore-mentioned surfactant.

Generally, these surfactants are each preferably used in an amount of 0.1 to 5 % by weight based on the total amount of monomers (a), (b), (c) and (d) used.

Examples of polymerization initiator which is used for the production of copolymer (I) include persulfates such as potassium persulfate and ammonium persulfate; and peroxides such as hydrogen peroxide, benzoyl peroxide and

t-butyl hydroperoxide; which may be used in combination with a reducing agent such as sodium bisulfite and ascorbic acid, and may also be used in the form of a redox initiator. In particular, water soluble polymerization initiators are preferred. As circumstances may demand, there may be used chain transfer agent such as dodecylmercaptan, disulfide xanthate, diazothioether and 2-propanol in combination with the above-mentioned polymerization initiators, with a view to the adjustment of molecular weight of copolymer (I).

Thus obtained copolymer (I) can have a number average molecular weight falling in a range of usually 30,000 to 500,000, preferably 100,000 to 300,000. In the present specification, a number average molecular weight is a value obtained by converting a molecular weight measured by gel permeation chromatography using tetrahydrofuran as a solvent, based on the molecular weight of polyethylene.

<u>Copolymer (I')</u>

In this invention, copolymer (I) has desirably a core-shell structure wherein the interior of particles has been rendered high molecular by means of crosslinkage to improve initial water-resistance, and wherein the surface layer of particles has been rendered low molecular to have film-formability (particle coalescence), with a view to the efficiency of inter-partiele photo-crosslinkage which is caused by natural light between maleimide groups or of inter-particle crosslinkage between carbonyl groups and compound (II) mentioned later.

In a concrete method for the production of the above-mentioned copolymer (I), a monomeric mixture which is to form core component is subjected to the first-stage emulsion polymerization with use of a polymerization initiator in the presence of the above-mentioned emulsifier to give an aqueous dispersion of copolymer (i), to which a monomeric mixture which is to form shell component is added. The resultant mixture is subjected to the second-stage emulsion polymerization with use of a polymerization initiator. (The copolymer which is produced at this second stage is hereinafter called copolymer (ii).) Usually, in the above-mentioned second-stage emulsion polymerization, no emulsifier is desirably added, or, even though added, in such an amount as to form no new particles. In this manner, there is obtained an aqueous dispersion of particles which has a core-shell structure composed of copolymer (i) as core and copolymer (ii) as shell. (The copolymer which is produced by this method is hereinafter called copolymer (I').)

In copolymer (I'), the monomeric mixture which is to form copolymer (i), i.e., core component, may contain 0 to 10 % by weight, preferably 0.5 to 5 % by weight, of maleimide group-containing ethylenically unsaturated monomer (a); 0 to 10 % by weight, preferably 0.5 to 5 % by weight, of carbonyl group-containing ethylenically unsaturated monomer (b); 0.01 to 5 % by weight, preferably 0.05 to 2 % by weight, of compound (c) and 75 to 99.99 % by weight, preferably 88 to 98.5 % by weight, of another ethylenically unsaturated monomer (d), each based on the total amount of said monomeric mixture.

In the formation of said copolymer (i), if the proportion of monomer (a) exceeds 10 % by weight, the efficiency of photo-curing is affected. If the proportion of monomer (b) exceeds 10 % by weight, particles tend to contain water after film formation, which may possibly decrease water resistance. If the proportion of compound (c) is less than 0.01 % by weight, coating film formed from a resin composition which has been prepared with use of copolymer (I') has insufficient initial water resistance. If, on the other hand, the proportion of compound (c) exceeds 5 % by weight, crosslinkage in the interior of particle core is apt to be promoted to reduce production stability and storage stability of copolymer (I').

Monomeric mixture which is to form copolymer (ii), i.e., shell component, may contain 1 to 30 % by weight, preferably 5 to 20 % by weight, of monomer (a); 1 to 30 % by weight, preferably 5 to 20 % by weight, of monomer (b); and 40 to 98 % by weight, preferably 60 to 90 % by weight, of monomer (d), each based on the total amount of said monomeric mixture.

In the formation of copolymer (ii), if the proportion of monomer (a) is less than 1 % by weight, effects of photo-curing are hard to be exhibited. If, on the other hand, the proportion of monomer (a) exceeds 30 % by weight, it drives up the price of product, and, moreover, initial water resistance becomes hard to be obtained at portions which receive weak light. If the proportion of monomer (b) is less than 1 % by weight, coating film which is formed by indoor-application is hard to show initial water-resistance. If, on the other hand, the proportion of monomer (b) exceeds 30 % by weight, it drives up the price of product, and, moreover, the concentration of hydrophilic group in copolymer tends to increase, resulting in low water-resistance contrary to expectation.

Weight ratio of solid content of copolymer (i) as core component to copolymer (ii) as shell component is not strictly restricted. From the viewpoint of film formability and initial water-resistance, however, the amount of copolymer (ii) is usually in the range of 400 to 25 parts by weight, preferably 300 to 30 parts by weight, per 100 parts by weight of copolymer (i). Copolymer (i) has generally a number average molecular weight of 50,000 to 500,000, in particular 100,000 to 300,000. Copolymer (ii) has generally a number average molecular weight of 30,000 to 500,000, in particular 100,000 to 200,000.

Compound (II)

The curable resin composition of the present invention contains compound (II) having, per molecule, two or more functional groups which may be the same or different, and which are selected from hydrazide group, semicarbazide group and hydrazone group as a cross-linking agent to react with carbonyl group which is contained in copolymer (I) or in copolymer (I').

Examples of compound (II-1) having two or more hydrazide groups per molecule include dihydrazide of saturated aliphatic dicarboxylic acid having 2 to 18 carbon atoms such as oxalic acid dihydrazide, malonic acid dihydrazide, succinic acid dihydrazide, glutaric acid dihydrazide, adipic acid dihydrazide and sebacic acid dihydrazide; dihydrazide of monoolefinic unsaturated dicarboxylic acid such as maleic acid dihydrazide, fumaric acid dihydrazide and itaconic acid dihydrazide; dihydrazide of phthalic acid, terephthalic acid and isophthalic acid; dihydrazide, trihydrazide or tetrahydrazide of pyromellitic acid; nitrilotriacetic acid trihydrazide, citric acid trihydrazide and 1,2,4-benzenetrihydrazide; ethylenediaminetetraacetic acid tetrahydrazide; 1,4,5,8-naphthoic acid tetrahydrazide; and polyhydrazide obtained by reaction between a lower polymer having a lower alkyl carboxylic acid ester group and hydrazine or hydrazine hydrate (see Japanese Patent Publication No. 22878/1977).

If too much hydrophobic, the hydrazide compounds described above are hard to be water-dispersed, and may be incapable of giving an even cross-linked coating film. It is preferable therefore to use compounds having suitable hydrophilicity and a relatively low molecular weight. Preferable among the examples above are dihydrazides of saturated aliphatic dicarboxylic acids such as adipic acid dihydrazide and succinic acid dihydrazide.

Examples of compound (II-2) having two or more semicarbazide groups per molecule include carbonic acid dihydrazide and bissemicarbazide; multifunctional semicarbazides obtained by making diisocyanates such as hexamethylenediisocyanate and isophoronediisocyanate or polyisocyanate compounds derived therefrom react with N,N-substituted hydrazines such as N,N-dimethylhydrazine or the above-mentioned hydrazides in excess; water-based multifunctional semicarbazides obtained by making an excess amount of the above-mentioned dihydrazides react with isocyanate groups contained in a product obtained from reaction between the above polyisocyanate compounds and active hydrogen compounds having hydrophilic groups such as polyetherpolyols and polyethylene glycol monoalkyl ethers; and the mixtures of the above multifunctional semi-carbazides and water-based multifunctional semicarbazides (for example, Japanese Patent Application Laid-Open No. 151358/1996, Japanese Patent Application Laid-Open No. 283377/1996 and Japanese Patent Application Laid-Open No. 245878/1996).

For example, bisacetyl dihydrazone can suitably be used as compound (II-3) having two or more hydrazone groups per molecule.

The above-mentioned compounds (II-1), (II-2) and (II-3) may be used either singly or in combination of two or more kinds thereof.

Curable resin composition

The curable resin composition of this invention comprises, as essential components, the above-mentioned copolymer (I) or copolymer (I') and compound (II) dissolved or dispersed in an aqueous medium.

The content of compound (II) in the curable resin composition of this invention is not strictly restricted, but can be varied according to the use or the like of said resin composition. Generally, however, the proportion of compound (II) is such that hydrazide group, semicarbazide group or hydrazone group which is contained in compound (II) is 0.01 to 2 moles, preferably 0.1 to 1.5 moles, per mole of carbonyl group in copolymer (I) or copolymer (I').

According to circumstances, the curable resin composition of the present invention may further contain an organosilicate compound or a modified organosilicate compound for the purpose of improvement in the stain resistance of coating film when the resin composition of the present invention is used as top coating paint for single-layer finishing or multi-layer finishing. Organosilicate compound which is used for such a purpose includes, for example, compounds of the following Formula (5):

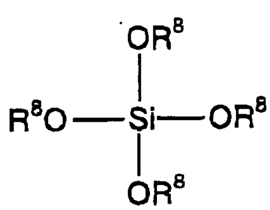 (5)

wherein $R^8$ is the same or different, and represents a hydrogen atom or a monovalent hydrocarbon group having 1 to 10, preferably 1 to 4, carbon atoms.

Suited as the hydrocarbon group described above are, for example, alkyl groups such as methyl, ethyl, n-propyl, iso-propyl, n-butyl, iso-butyl, t-butyl, n-pentyl, iso-pentyl, n-hexyl, iso-hexyl and n-octyl and aryl groups such as phenyl.

Specific examples of the organosilicate compound represented by Formula (5) include tetrahydroxysilane, tetramethoxysilane, tetraethoxysilane, tetrapropoxysilane, tetrabutoxysilane, tetraphenoxysilane and dimethoxydiethoxysilane, which can be used either alone or in combination of two or more kinds thereof.

When the above-mentioned organosilicate compound is to be introduced into aqueous composition, it can be blended in the form of an emulsion which is prepared by forcibly aqueous-dispersing organosilicate compound together with an emulsifier by means of a homogenizer.

Branched or linear condensation products of the above-mentioned organosilicate compounds can also be used, in which case condensation degree falls suitably in a range of usually 2 to 100, particularly 5 to 50.

Furthermore, a modified organosilicate compound prepared by making an alkoxy group or a hydroxyl group contained in the organosilicate compound and/or a condensation product thereof described above react with a part (for example, 0.001 to 0.5 mole, particularly 0.05 to 0.2 mole of polyalkylene glycol-based compound per mole of the above alkoxy group or hydroxyl group) of a polyalkylene glycol-based compound can particularly suitably be used due to their good solubility in water.

Polyalkylene glycol-based compound as a modifying agent includes compounds of the following Formula (6):

$$R^9O\text{-}(R^{10}O)_n\text{-}H \qquad (6)$$

wherein $R^9$ represents a hydrogen atom, an alkyl group or an aryl . group; $R^{10}$ represents an alkylene group having 2 to 4 carbon atoms; and n is 2 to 60.

Concrete examples of the above-mentioned compounds include polyalkylene glycols such as polyethylene glycol, polypropylene glycol and polytetramethylene glycol; alkoxypolyalkylene glycols such as methoxypolyethylene glycol, ethoxypolyethylene glycol, ethoxypolypropylene glycol and ethoxypolybutylene glycol; and polyoxyalkylene alkylphenyl ethers such as polyoxyethylene nonylphenyl ether and polyoxyethylene octylphenyl ether. In particular, polyethylene glycol and polyoxyethylene nonylphenyl ether are suited.

The content of the organosilicate compound described above in the resin composition of the present invention can be allowed to fall in a range of usually 0.1 to 50 parts by weight, preferably 1 to 20 parts by weight, per 100 parts by weight of the resin solid content in the above resin composition.

Furthermore, a color pigment, an extender pigment, a surfactant, a dispersant, a defoaming agent, a thickener, a film-forming aid, a preservative, an antifreezing agent and the like may be blended as circumstances may demand. The resin composition of the present invention may, under circumstances, contain a compound having two or more (meth)acryloyl groups such as alkylene glycol di(meth)acrylate, polyalkylene glycol poly(meth)acrylate, urethane (meth)acrylate and polyester (meth)acrylate, by which to promote photo-curing caused by maleimide groups in copolymer (I) or copolymer (I').

The curable resin composition of this invention can be produced by adding and blending compound (II) and other addtive to a dispersion of copolymer (I) or copolymer (I') in an aqueous medium.

The curable resin composition of this invention is readily cured at room temperature. The irradiation of natural light further promotes curing. Hence, the curable resin composition of this invention is suitable as a resin component in water-based paint for internal and external decoration of buildings and for the coating of bridges and ships.

Water-based coating composition

When the curable resin composition of the present invention is used as paint, conventional paint additives can be blended. Examples of additives include fillers such as clay, talc and titan white; film-forming aids such as butyl cellosolve, butyl carbitol and dipropylene glycol monobutyl ether; plasticizers such as dibutyl phthalate and dioctyl phthalate; tackifiers such as rosin, terpenephenol and petroleum resins; various surfactants used for the purposes of humidifying, dispersing and defoaming; and thickeners, thixotropy agents and antifreezing agents.

Furthermore, when the resin composition of the present invention is used as a coloring paint, a pigment can be blended. Conventional paint pigment can be used as said pigment. Concrete examples include coloring pigments such as titanium oxide, carbon black and red iron oxide; extender pigments such as calcium carbonate, talc, mica, clay, diatomaceous earth, silicate and baryte; and aggregates, which can suitably be selected and used according to use of the coating composition of the present invention.

As for pigment content, pigment volume concentration (hereinafter abbreviated as "PVC") in said coating composition is preferably in a range of 10 to 70 % so that the photocuring of the above-mentioned coating composition

may not substantially be prevented, and that the coating composition may keep its hiding power suitable as enamel paint.

Here, the "pigment volume concentration (PVC)" is a volume proportion of pigment content to solid content in the mixture of resin and pigment in the above coating composition, which is calculated from the following equation:

$$\text{PVC (\%)} = \frac{\text{volume of pigment component}}{\text{(volume of pigment component) + (volume of resin solid content)}} \times 100$$

When the coating composition of the present invention is used as a top coating paint, PVC is 10 to 60 %, preferably 15 to 55 %, while, when the coating composition of the present invention is used as an under coating paint, PVC is 30 to 70 %, preferably 30 to 66 %.

The water-based coating composition of the present invention is readily cured at a room temperature, and the curing thereof is further expedited by irradiation with natural light. Hence, the water-based coating composition of this invention is particularly suitable for internal and external decoration of buildings, and for the coating of bridges and ships. The coating composition of this invention gives a coating film having an excellent performance even with single layer finish, and, therefore, the coating composition of this invention can be used as a single-layer top coating paint. The coating composition of this invention can also be used as a top coating paint for multilayer finish, or as an under coating paint for substrate arrangement.

The coating composition of the present invention can be applied to substrate, a base-arranged face or a pre-coated face. Examples of said substrate include, without restriction, a concrete face, a mortar face, a slate board, a PC board, an AL board, a cement calcium silicate board, a concrete block face, wood, stone, plastic and metal. Examples of the base-arranged face or pre-coated face include coating film faces of an acryl resin base, an acryl urethane resin base, a polyurethane resin base, a fluororesin base, a silicon acryl resin base, a vinyl acetate resin base and an epoxy resin base which are provided on these substrates.

The water-based coating composition of the present invention is applied usually in an amount of 0.3 to 1.5 $kg/m^2$, preferably 0.4 to 1.0 $kg/m^2$, when used for single layer finish; usually in an amount of 0.06 to 2.0 $kg/m^2$, preferably 0.8 to 1.6 $kg/m^2$, when used as a top coating paint; and usually in an amount of 0.3 to 2.0 $kg/m^2$, preferably 0.5 to 1.5 $kg/m^2$, when used as an under coating paint.

Application is conducted, for instance, by means of conventionally known applicators such as a roller, an air spray, an airless spray, a lithin gun, a universal gun and a brush.

The present invention is explained below in more detail, with reference to examples, wherein "part" means part by weight.

Production of copolymer

Production Example 1

A four-necked flask was charged with 35 parts of deionized water and 0.5 part of "Aquaron HS10" (Note 1). After the interior of flask was purged with nitrogen, the content of flask was heated to 80°C. Subsequently, one part of ammonium persulfate and two parts from among monomer emulsion of the following formulation. After 15 minutes from said addition, the rest of the monomer emulsion was added over a period of two hours, and, then, the resulting mixture was left to mature for two hours. After matured, said mixture was cooled, and was treated with ammonia water so that pH might fall within the range between 8 and 9, and, thus, there was obtained an aqueous dispersion of copolymer (A-1) which had a solid content of 55 % by weight.

| Formulation of monomer emulsion | |
|---|---|
| Deionized water | 47 parts |
| "Aquaron HS10" (Note 1) | 0.5 part |
| Imideacrylate (Note 2) | 10 parts |
| Diacetoneacrylamide | 5 parts |
| n-Butylmethacrylate | 49.5 parts |
| Methylmethacrylate | 20 parts |
| n-Butylacrylate | 14 parts |
| 1,6-Hexanediol diacrylate | 0.6 part |
| Acrylic acid | 1 part |

(Note 1) "Aquaron HS10": trade mark of polyoxyalkylene chain-containing radically polymerizable surfactant of the following Formula (7), manufactured by Dai-Ichi Kogyo Seiyaku Co., Ltd.

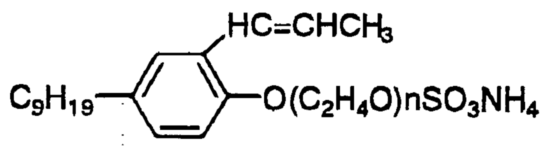

(n=10) (7)

(Note 2) Imideacrylate: Imideacrylate of the following Formula (8)

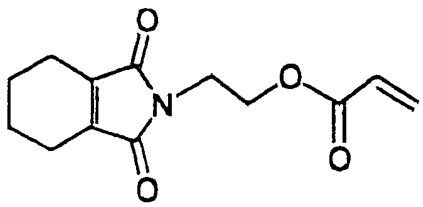

(8)

Production of copolymer (two-stage polymerization)

Production Example 2

A flask was charged with 28.5 parts of deionized water and 0.1 part of "Newcol 707SF" (Note 3). After the interior of flask was purged with nitrogen, the content of flask was kept at a temperature of 85°C. The flask was subsequently fed with 3 % of the first-stage monomer emulsion of the following formulation and with 25 % of the following aqueous solution of catalyst, and, then, the resulting mixture was stirred for 20 minutes at 85°C to give seed particles. Later, 67 % of the following first-stage monomer emulsion and 50 % of the following aqueous solution of catalyst were added dropwise over a period of two hours.

| Formulation of first-stage monomer emulsion | |
|---|---|
| Deionized water | 36.8 parts |
| Styrene | 15 parts |
| Methylmethacrylate | 28 parts |
| n-Butylacrylate | 42 parts |
| 2-Ethylhexylacrylate | 13.5 parts |
| Acrylic acid | 1 part |
| 1,6-Hexanediol diacrylate | 0.5 part |
| "Newcol 707SF" (Note 3) | 6.6 parts |

| Formulation of aqueous solution of catalyst | |
|---|---|
| Ammonium persulfate | 0.5 part |
| Deionized water | 10 parts |

After the dropwise addition was over, the resultant liquid was maintained at 85°C. Then, 30 % by weight of the second-stage monomer emulsion of the following formulation and 25 % by weight of the above-mentioned aqueous solution of catalyst were added dropwise over a period of two hours.

| Formulation of second-stage monomer emulsion | |
|---|---|
| Deionized water | 36.8 parts |
| Imideacrylate (Note 2) | 10 parts |
| Diacetoneacrylamide | 10 parts |

(continued)

| Formulation of second-stage monomer emulsion | |
|---|---|
| Styrene | 14 parts |
| Methylmethacrylate | 23 parts |
| n-Butylacrylate | 42 parts |
| Acrylic acid | 1 part |
| "Newcol 707SF" (Note 3) | 6.6 parts |

After the dropwise addition was over, the resultant mixture was maintained at a temperature of 85°C for two hours, and, then, the temperature was lowered to 40 to 60°C. The mixture was subsequently treated with ammonia water so that pH might fall within the range between 8 and 9, and, thus, there was obtained an aqueous dispersion of copolymer (B-1) which had a core-shell ratio of 70/30 and a solid content of 55 %.

(Note 3) "Newcol 707SF": anionic surfactant having a polyoxyethylene chain, manufactured by Nippon Nyukazai Co., Ltd.; non-volatile content: 30 %

Production Examples 3 to 7

Aqueous dispersions of copolymer (B-2) and (B-4) ~ (B-6) were obtained in the same manner as in Production Example 2 except that the first- and the second-stage monomer emulsions which were added dropwise had each a formulation as shown in Table 1 below. In Production Example 4, there was obtained an aqueous dispersion of copolymer (B-3) which had a core-shell ratio of 60/40 in the same manner as in Production Example 2 except that the amount of the first-stage monomer emulsion which was added dropwise after the step of seed particles formation was 57 % by weight, and that the amount of the second-stage monomer emulsion which was added dropwise was 40 % by weight.

Table 1

| | | Production Example | | | | | |
|---|---|---|---|---|---|---|---|
| | | 2 | 3 | 4 | 5 | 6 | 7 |
| Aqueous dispersions of copolymer | | B-1 | B-2 | B-3 | B-4 | B-5 | B-6 |
| Formulation of first-stage monomer | Imideacrylate (Note 2) | | 5 | | 5 | | |
| | Diacetoneacrylamide | | | | 0.5 | | |
| | Styrene | 15 | 15 | 15 | 15 | 15 | 15 |
| | Methylmethacrylate | 28 | 28 | 28 | 28 | 28 | 28 |
| | n-Butylacrylate | 42 | 42 | 42 | 42 | 42 | 42 |
| | 2-Ethylhexylacrylate | 13.5 | 8.5 | 13.5 | 8 | 13.5 | 13.5 |
| | Acrylic acid | 1 | 1 | 1 | 1 | 1 | 1 |
| | 1,6-Hexanediol diacrylate | 0.5 | 0.5 | 0.5 | 0.5 | 0.5 | 0.5 |
| Formulation of second-stage monomer | Imideacrylate (Note 2) | 10 | 10 | 10 | 5 | 15 | |
| | Diacetoneacrylamide | 10 | 5 | 10 | 15 | | 15 |
| | Styrene | 14 | 14 | 14 | 14 | 14 | 14 |
| | Methylmethacrylate | 23 | 23 | 23 | 23 | 28 | 23 |
| | n-Butylacrylate | 42 | 42 | 42 | 42 | 42 | 42 |
| | 2-Ethylhexylacrylate | | 5 | | | | 5 |
| | Acrylic acid | 1 | 1 | 1 | 1 | 1 | 1 |
| First-stage/Second-stage solid content ratio | | 70/30 | 70/30 | 60/40 | 70/30 | 70/30 | 70/30 |
| Solid content | | 55 | 55 | 55 | 55 | 55 | 55 |

Production of modified organosilicate

Production Example 8

A reactor equipped with a stirrer, a thermometer, a refluxing tube, a nitrogen-introducing tube and a water separator was charged with 500 parts of "Ethyl Silicate 48" (Note 4), 324.5 parts of "Newcol 568" (Note 5) and 0.082 part of "Scat 24" (Note 6). The resultant mixture was heated to 120°C with stirring in nitrogen atmosphere. Then, the temperature was raised, over a period of 4 hours, to 160°C which was maintained for one hour. Evaporating ethanol etc. was distilled off in an amount of 25 parts by water separator, and, thus, there was obtained 800 parts of modified organosilicate.

(Note 4) "Ethyl Silicate 48": condensation product of ethyl silicate, manufactured by Tama Chemicals Co., Ltd.
(Note 5) "Newcol 568": polyoxyethylene nonylphenyl ether, anufactured by Nippon Nyukazai Co., Ltd.
(Note 6) "Scat 24": tin-based catalyst, manufactured by ankyo Organic Chemicals Co., Ltd.

Preparation of premix coating composition

Production Examples 9 to 16

Components of formulation (A) as shown in the following Table 2 were added in order, and, then, the resultant mixture was stirred by disper for 30 minutes until homogenized to give a pigment-dispersed paste. Then, components of formulation (B) as shown in the following Table 2 were added in order to said pigment-dispersed paste, and were stirred by disper until homogenized to give premix coating compositions (P-1) to (P-6) and (Q-1) to (Q-2).

Table 2

| | | | Production Example | | | | | | | |
|---|---|---|---|---|---|---|---|---|---|---|
| | | | 9 | 10 | 11 | 12 | 13 | 14 | 15 | 16 |
| Formulation (A) | Premix coating composition | | P-1 | P-2 | P-3 | P-4 | P-5 | P-6 | Q-1 | Q-2 |
| | Clean water | | 10 | 10 | 10 | 10 | 10 | 8.5 | 10 | 10 |
| | Ethylene glycol | | 2 | 2 | 2 | 2 | 2 | 2 | 2 | 2 |
| | Slaoff 72N (Note 7) | | 0.1 | 0.1 | 0.1 | 0.1 | 0.1 | 0.1 | 0.1 | 0.1 |
| | Nopcosand K (Note 8) | | 0.4 | 0.4 | 0.4 | 0.4 | 0.4 | 0.4 | 0.4 | 0.4 |
| | Titan White JR-600A (Note 9) | | 27 | 27 | 27 | 27 | 27 | 27 | 27 | 27 |
| | SN Defoamer A-63 (Note 10) | | 0.4 | 0.4 | 0.4 | 0.4 | 0.4 | 0.4 | 0.4 | 0.4 |
| Formulation(B) | 55% Aqueous dispersion of copolymer | Kind | A-1 | B-1 | B-2 | B-3 | B-4 | B-1 | B-5 | B-6 |
| | | Amount | 54 | 54 | 54 | 54 | 54 | 54 | 54 | 54 |
| | Texanol | | 5 | 5 | 5 | 5 | 5 | 5 | 5 | 5 |
| | Adekanol UH-438 (Note 11) | | 0.7 | 0.7 | 0.7 | 0.7 | 0.7 | 0.7 | 0.7 | 0.7 |
| | SN Defoamer 380 (Note 10) | | 0.4 | 0.4 | 0.4 | 0.4 | 0.4 | 0.4 | 0.4 | 0.4 |
| | Modified organosilicate | | | | | | | 1.5 | | |
| PVC (%) (Note 12) | | | 20 | 20 | 20 | 20 | 20 | 20 | 20 | 20 |

(Note 7) "Slaoff 72N": preservative, manufactured by Takeda Chemical Industrties, Ltd.
(Note 8) "Nopcosand K": pigment dispersant, manufactured by San Nopco Ltd.
(Note 9) "Titan White JR-600A": titan white, manufactured by Tayca Corporation
(Note 10) "SN Defoamer 380": defoamer, manufactured by San Nopco Ltd.
(Note 11) Adekanol UH-438: thickener, manufactured by Asahi Denka Kogyo K. K.
(Note 12) PVC: Pigment Volume Concentration; proportion by volume of pigment in solid content in mixture of resin and pigment

Preparation of paint

Examples 1 to 7 and Comparative Examples 1 to 4

Cross-linking agent was blended with 100 parts of each of premix paint which had been obtained in Production Examples 9 to 16, in such a combination as shown in Table 3, to give respective coating compositions.

Preparation of test boards for coating

"Multiconcrete Primer EPO" (epoxy-based primer, manufactured by Kansai Paint Co., Ltd.) was applied onto a slate board of 70 × 150 × 5 mm. On the following day, each paint shown in the following Table 3 was diluted to about 70 KU by clean water, and was then applied by brush so that the coating amount might be about 0.15 $kg/m^2$.

Each paint and each test board was evaluated according to criteria described later. Results are shown in Table 3.

Table 3

| | | Example | | | | | | | Comparative Example | | | |
|---|---|---|---|---|---|---|---|---|---|---|---|---|
| | | 1 | 2 | 3 | 4 | 5 | 6 | 7 | 1 | 2 | 3 | 4 |
| Formulation | Premix paint (100 parts) | P-1 | P-2 | P-3 | P-4 | P-5 | P-5 | P-6 | P-1 | P-2 | Q-1 | Q-2 |
| | Adipic acid dihydrazide | 0.3 | | | 0.2 | 0.07 | 0.2 | 0.2 | | | 0.2 | 0.2 |
| | SX-601 (Note 13) | | 2 | | | | | | | | | |
| | 20% Bisacetyl dihydrazone (Note 14) | | | 1 | | | | | | | | |
| Number of functional group per mole of carbonyl group | | 0.39 | 0.82 | 1.31 | 0.33 | 0.10 | 0.29 | 0.44 | 0.00 | 0.00 | 0.37 | 0.29 |
| Coating composition storage properties | | ◎ | ◎ | ◎ | ◎ | ◎ | ◎ | ◎ | ◎ | ◎ | ◎ | ◎ |
| Water resistance in initial drying (outdoor) | | ◎ | ◎ | ◎ | ◎ | ◎ | ◎ | ◎ | ○ | ○ | ◎ | ○ |
| Water resistance in initial drying (indoor) | | ◎ | ◎ | ◎ | ◎ | ◎ | ◎ | ◎ | △ | △ | △ | ◎ |
| Outdoor dirt pick-up and resistance | | 3.8 | 3.0 | 3.1 | 3.3 | 3.2 | 2.8 | 1.5 | 5.8 | 6.1 | 4.8 | 4.5 |

(Note 13) "SX-601": semicarbazide-based functional group-containing compound, manufactured by Asahi Chemical Industries Ltd. solid content: 45 %; content of $-NHCO-NHNH_2$: 4.8 mmol/g resin

(Note 14) 20 % Bisacetyl dihydrazone: methyl ethyl ketone solution

Evaluation test

Test of storage stability of paint

Each of the paint which had been obtained in the above-mentioned manner was stored in a thermostatic chamber of 50°C for one month, and, then, the state of paint was visually observed:

◎ : Almost unchanged from initial stage, and good;
○ : A little increase in viscosity, but practically no problem;
Δ: Notable increase in viscosity, and not practically usable, but not gelatinized;
× : Gelatinized

Water resistance test in initial drying (outdoor)

The respective test boards coated with the respective paint obtained in the above manner were put in a cool chamber of 5°C for 30 minutes immediately after coating, and were then left to stand outdoors (in the shade on the northern side of a building) for about one hour in cloudy weather (under conditions of a temperature of 8 to 10°C and an RH of 65 to 75 %). Then, the respective test boards were dipped in water for 10 minutes, and the appearance of the coating films was visually observed:

◎ : No abnormalities on coating film
○ : A little delustering and blistering, but practically no problem
Δ: Large or a lot of blisters, or partial dissolution of of coating film
× : Marked dissolution of coating film

Water resistance test in initial drying (indoor)

The respective test boards coated with the respective paint obtained in the above manner were put in a cool chamber of 10°C for 30 minutes from immediately after coating, and were then left to stand in a bright room which was not directly exposed to the sunlight but which admitted natural light, for about one hour (under conditions of a temperature of 20°C and an RH of 60 to 70 %). Then, the respective test boards were dipped in water for 10 minutes, and, thus, the appearance of the coating films was visually observed:

◎ : No abnormalities on coating film
○: A little delustering and blistering, but practically no problem
Δ: Large or a lot of blisters, or partial dissolution of of coating film
× : Marked dissolution of coating film

Outdoor exposure test (Dirt pick-up resistance)

A 90 × 300 × 5 mm slate board was coated with primer and respective paint by the same method as in the test board for paint described above, and, on the following day, was overcoated with respective paint similarly, and, then, was dried at a room temperature for 7 days to give two test coating boards for each paint, one for exposure test, and the other for control. The test coating board for exposure was mounted on an exposing board facing south with an angle of inclination of 30 degrees in Tokyo Office of Kansai Paint Co., Ltd. Three months later, the boards were taken out, and measured for a color difference ΔE in comparison with control. The smaller value is the better.

As stated above, owing to the combination of intra-particle crosslinkage which is caused by polymerizable unsaturated compound with inter-particle crosslinkage which is caused by both carbonyl group and hydrazide group and further with inter-particle crosslinkage which is attained by photo-crosslinkage caused by maleimide group, the resin composition for water-based paint of this invention has improved coating film properties such as water resistance and stain resistance at the initial stage after paint application even under an application-drying condition where moisture evaporation is slow (e.g., cloudy weather, low temperature or indoor), so long as light such as ultraviolet ray reaches.

## Claims

1. A curable resin composition which characteristically comprises both copolymer (I) which is produced from the emulsion polymerization of 1 to 30 % by weight of maleimide group-containing ethylenically unsaturated monomer

(a), 1 to 30 % by weight of carbonyl group-containing ethylenically unsaturated monomer (b), 0.01 to 2 % by weight of compound (c) having two or more polymerizable unsaturated group per molecule and 38 to 97.99 % by weight of another ethylenically unsaturated monomer (d), and compound (II) which has, per molecule, two or more same or different functional groups selected from hydrazide group, semicarbazide group and hydrazone group.

**2.** A curable resin composition of claim 1 wherein maleimide group-containing ethylenically unsaturated monomer (a) are compounds which have a cyclic imide group of the following Formula (1):

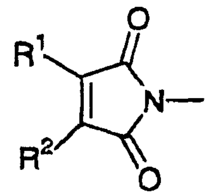

(1)

wherein $R^1$ and $R^2$, taken independently, represent a hydrogen atom or an alkyl group, or, taken together, represent a group forming a carbon ring along with carbon atoms to which they are bonded.

**3.** A curable resin composition of claim 2 wherein compounds which have a cyclic imide group are imide (meth) acrylate of the following Formula (2):

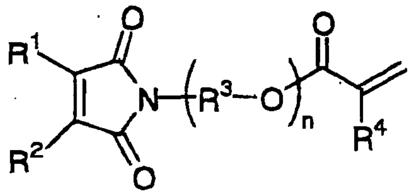

(2)

wherein $R^1$ and $R^2$ mean the same as defined in claim 2; $R^3$ represents an alkylene group; $R^4$ represents a hydrogen atom or methyl group; and n is an integer of 1 to 6.

**4.** A curable resin composition of claim 3 wherein imide (meth)acrylate are compounds of the following Formulas (3) and (4):

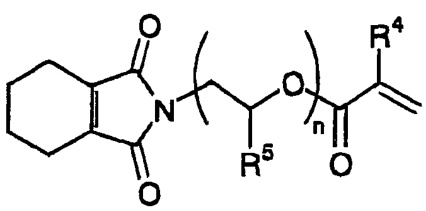

(3)

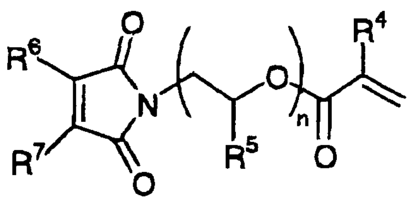

(4)

wherein $R^4$ and $R^5$ represent independently a hydrogen atom or a methyl group; $R^6$ and $R^7$ represent independently an alkyl group having at most four carbon atoms; and n is an integer of 1 to 6.

**5.** A curable resin composition of claim 1 wherein carbonyl group-containing ethylenically unsaturated monomer (b) is a monomer having, per molecule, both at least one carbonyl-containing group, which is selected from aldehyde group and keto group, and a polymerizable double bond.

**6.** A curable resin composition of claim 1 wherein carbonyl group-containing ethylenically unsaturated monomer (b) is selected from the group consisting of (meth)acrolein, formylstyrol, vinyl alkyl ketone having 4 to 7 carbon atoms, acetoacetoxyethyl(meth)acrylate and diacetone(meth)acrylamide.

**7.** A curable resin composition of claim 1 wherein compound (c) having two or more polymerizable unsaturated groups per molecule are compounds which contain, per molecule, 2 to 4 ethylenically unsaturated bond-containing groups selected from the group consisting of (meth)acryl group, allyl group and vinyl group.

**8.** A curable resin composition of claim 1 wherein compound (c) having two or more polymerizable unsaturated groups per molecule is selected from the group consisting of ethylene glycol di(meth)acrylate, triethylene glycol di(meth) acrylate, tetraethylene glycol di(meth)acrylate, 1,3-butylene glycol di(meth)acrylate, trimethylolpropane tri(meth) acrylate, 1,4-butanediol di(meth)acrylate, neopentyl glycol di(meth)acrylate, 1,6-hexanediol di(meth)acrylate, pentaerythritol di(meth)acrylate, pentaerythritol tetra(meth)acrylate, glycerol di(meth)acrylate, 1,1,1-tris(hydroxymethyl)ethane di(meth)acrylate, 1,1,1-tris(hydroxymethyl)ethane tri(meth)acrylate and 1,1,1-tris(hydroxymethyl)propane tri(meth)acrylate, allyl (math)acrylate, triallyl isocyanurate, diallyl terephthalate and divinyl benzene.

**9.** A curable resin composition of claim 1 wherein another ethylenically unsaturated monomer (d) is selected from the group consisting of alkyl (meth)acrylate having an alkyl group having 1 to 8 carbon atoms, (meth)acrylic acid, styrene, hydroxyalkyl (meth)acrylate having an alkylene group having 2 to 4 carbon atoms and glycidyl (meth) acrylate.

**10.** A curable resin composition of claim 1 wherein copolymer (I) is produced by the emulsion polymerization of 5 to 20 % by weight of maleimide group-containing ethylenically unsaturated monomer (a), 5 to 20 % by weight of carbonyl group-containing ethylenically unsaturated monomer (b), 0.5 to 1 % by weight of compound (c) having two or more polymerizable unsaturated groups per molecule and 59 to 89.5 % by weight of another ethylenically unsaturated monomer (d).

**11.** A curable resin composition of claim 1 wherein copolymer (I) has a core-shell structure.

**12.** A curable resin composition of claim 11 wherein copolymer (I) is copolymer (I') which is obtained by subjecting 0 to 10 % by weight of maleimide group-containing ethylenically unsaturated monomer (a), 0 to 10 % by weight of carbonyl group-containing ethylenically unsaturated monomer (b), 0.01 to 5 % by weight of compound (c) having two or more polymerizable unsaturated groups per molecule and 75 to 99.99 % by weight of another ethylenically unsaturated monomer (d) to emulsion polymerization to give a copolymer, and then adding, to an aqueous dispersion of thus produced copolymer, a monomer mixture, which contains 1 to 30 % by weight of maleimide group-containing ethylenically unsaturated monomer (a), 1 to 30 % by weight of carbonyl group-containing ethylenically unsaturated monomer (b) and 40 to 98 % by weight of another ethylenically unsaturated monomer (d), for further emulsion polymerization.

**13.** A curable resin composition of claim 11 wherein copolymer (I) is copolymer (I') which is obtained by subjecting 0.5 to 5 % by weight of maleimide group-containing ethylenically unsaturated monomer (a), 0.5 to 5 % by weight of carbonyl group-containing ethylenically unsaturated monomer (b), 0.05 to 2 % by weight of compound (c) having two or more polymerizable unsaturated groups per molecule and 88 to 98.5 % by weight of another ethylenically unsaturated monomer (d) to emulsion polymerization to give a copolymer, and then adding, to an aqueous dispersion of thus produced copolymer, a monomer mixture, which contains 5 to 20 % by weight of maleimide group-containing ethylenically unsaturated monomer (a), 5 to 20 % by weight of carbonyl group-containing ethylenically unsaturated monomer (b) and 60 to 90 % by weight of another ethylenically unsaturated monomer (d), for further emulsion polymerization.

**14.** A resin composition of claim 1 wherein compound (II) is selected from the group consisting of oxalic acid dihydrazide, malonic acid dihydrazide, succinic acid dihydrazide, glutaric acid dihydrazide, adipic acid dihydrazide and sebacic acid dihydrazide, maleic acid dihydrazide, fumaric acid dihydrazide and itaconic acid dihydrazide, phthalic acid dihydrazide, terephthalic acid dihydrazide, isophthalic acid dihydrazide; dihydrazide, trihydrazide or tetrahydrazide of pyromellitic acid; nitrilotriacetic acid trihydrazide, citric acid trihydrazide, 1,2,4-benzenetrihydrazide, ethylenediaminetetraacetic acid tetrahydrazide, 1,4,5,8-naphthoic acid tetrahydrazide; and polyhydrazide obtained by reaction between a lower polymer having a lower alkyl carboxylic acid ester group and hydrazine or hydrazine hydrate; carbonic acid dihydrazide, bissemicarbazide; multifunctional semicarbazides obtained by making diisocyanates or polyisocyanate compounds derived therefrom react with N,N-dimethylhydrazine or hydrazide in excess; water-based multifunctional semicarbazides obtained by making an excess amount of dihydrazides react with isocyanate groups contained in a product obtained from reaction between the above polyisocyanate compounds and active hydrogen compounds having hydrophilic groups such as polyetherpolyols and polyethylene glycol monoalkyl ethers; mixtures of the above-mentioned multifunctional semi-carbazides and water-based multifunctional semicarbazides; and bisacetyl dihydrazone.

**15.** A curable resin composition of claim 1 wherein compound (II) is dihydrazide of saturated aliphatic dicarboxylic acid having 2 to 18 carbon atoms.

**16.** A curable resin composition of claim 1 wherein the proportion of compound (II) is such that the amount of hydrazide group, semicarbazide group or hydrazone group is in the range of 0.01 to 2 moles per mole of carbonyl group in copolymer (I).

**17.** A resin composition of claim 1 which further contains an organosilicate compound and/or a condensation product thereof; or a modified organosilicate compound which is prepared by making 0.001 to 0.5 mole of polyalkylene glycol-based compound per mole of alkoxy group or hydroxyl group contained in the organosilicate compound and/or a condensation product thereof.

**18.** A curable resin composition of claim 17 wherein organosilicate compound has the following Formula (5):

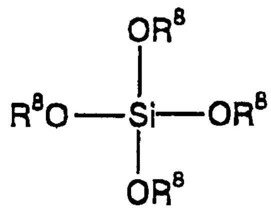

(5)

wherein $R^8$ is the same or different, and represents a hydrogen atom or a monovalent hydrocarbon group having 1 to 10 carbon atoms.

**19.** A curable resin composition of claim 17 wherein polyalkylene glycol-based compound as a modifying agent are compounds of the following Formula (6):

$$R^9O\text{-}(R^{10}O)_n\text{-}H \qquad (6)$$

wherein $R^9$ represents a hydrogen atom, an alkyl group or an aryl group; $R^{10}$ represents an alkylene group having 2 to 4 carbon atoms; and n is 2 to 60.

**20.** A curable resin composition of claim 17 wherein the content of organosilicate compound and/or condensation product thereof; or modified organosilicate compound is 0.1 to 50 parts by weight per 100 parts by weight of the resin solid content in the resin composition.

**21.** A water-based coating composition which contains the resin composition of claim 1.

**22.** An article which has been coated with the water-based coating composition of claim 21.

European Patent Office

# EUROPEAN SEARCH REPORT

Application Number
EP 02 01 1631

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 0 618 238 A (MITSUBISHI YUKA BADISCHE CO., LTD.) 5 October 1994 (1994-10-05)<br>* page 2, line 35 - page 4, line 3 *<br>* page 5, line 5 - line 47; claims 1-8 *<br>--- | 1-22 | C08F8/30 |
| Y | GB 2 295 781 A (KANSAI PAINT CO., LTD.) 12 June 1996 (1996-06-12)<br>* page 3, line 19 - page 8, line 16 *<br>* page 12, line 18 - page 15, line 22 *<br>* page 16, line 3 - page 17, line 10; claims 1-31 *<br>--- | 1-22 | |
| Y | EP 0 765 922 A (BASF CORPORATION) 2 April 1997 (1997-04-02)<br>* page 2, line 51 - page 4, line 55 *<br>* page 5, line 3 - line 59 *<br>* page 6, line 12 - page 7, line 58; claims 1-24 *<br>--- | 1-22 | |
| Y | WO 99 48928 A (SUN CHEMICAL CORPORATION) 30 September 1999 (1999-09-30)<br>* page 21, line 16 - page 40, line 17 *<br>* page 40, line 26 - page 42, line 1 *<br>* page 43, line 10 - page 44, line 31 *<br>* page 45, line 20 - line 29; claims 1-29 *<br>--- | 1-22 | TECHNICAL FIELDS SEARCHED (Int.Cl.7)<br>C08F<br>C09D |
| Y | WO 00 31197 A (AKZO NOBEL N.V.) 2 June 2000 (2000-06-02)<br>* page 2, line 12 - page 8, line 13 *<br>* page 9 - page 11; claims 1-30 *<br>--- | 1-22 | |
| A | GB 933 196 A (BAYER AG) 8 August 1963 (1963-08-08)<br>* page 1, line 35 - page 2, line 9; claims 1-10 *<br>---<br>-/-- | 1 | |

The present search report has been drawn up for all claims

| Place of search | Date of completion of the search | Examiner |
|---|---|---|
| THE HAGUE | 13 September 2002 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 02 01 1631

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 219 046 A (BASF AG) 22 April 1987 (1987-04-22) * column 3, line 24 - column 4, line 45 * * column 5, line 12 - line 35; claims 1-5 * | 1 | |
| A | EP 0 331 052 A (VEDRIL S.P.A.) 6 September 1989 (1989-09-06) * claims 1-14 * | 1 | |
| D,A | DATABASE WPI Section Ch, Week 198945 Derwent Publications Ltd., London, GB; Class A41, AN 1989-327660 XP002213495 & JP 01 242569 A (NIPPON KAYAKU KK), 27 September 1989 (1989-09-27) * abstract * | 1 | |
| D,A | DATABASE WPI Section Ch, Week 198126 Derwent Publications Ltd., London, GB; Class A21, AN 1981-46839D XP002213496 & JP 56 053119 A (NIPPON SHOKUBAI KAGAKU KOGYO CO., LTD.), 12 May 1981 (1981-05-12) * abstract * | 1 | TECHNICAL FIELDS SEARCHED (Int.Cl.7) |
| A | EP 0 464 454 A (DAI-ICHI KOGYO SEIYAKU CO., LTD.) 8 January 1992 (1992-01-08) * page 4, line 1 - line 34; claims 1,2 * | 1 | |

-/--

The present search report has been drawn up for all claims

| Place of search | Date of completion of the search | Examiner |
|---|---|---|
| THE HAGUE | 13 September 2002 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 02 01 1631

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DATABASE WPI<br>Section Ch, Week 199736<br>Derwent Publications Ltd., London, GB;<br>Class A14, AN 1997-389433<br>XP002213497<br>& JP 09 169818 A (ASAHI KASEI KOGYO KK),<br>30 June 1997 (1997-06-30)<br>* abstract *<br>--- | 1 | |
| A | DATABASE WPI<br>Section Ch, Week 199238<br>Derwent Publications Ltd., London, GB;<br>Class A18, AN 1992-311114<br>XP002213498<br>& JP 04 214747 A (ASAHI CHEM. IND. CO.,<br>LTD.), 5 August 1992 (1992-08-05)<br>* abstract *<br>----- | 1 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 13 September 2002 | Permentier, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 01 1631

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2002

| Patent document cited in search report | | Publication date | Patent family member(s) | | Publication date |
|---|---|---|---|---|---|
| EP 618238 | A | 05-10-1994 | JP | 2920577 B2 | 19-07-1999 |
| | | | JP | 5098071 A | 20-04-1993 |
| | | | EP | 0618238 A1 | 05-10-1994 |
| | | | DE | 69306750 D1 | 30-01-1997 |
| | | | DE | 69306750 T2 | 07-05-1997 |
| GB 2295781 | A | 12-06-1996 | JP | 9038568 A | 10-02-1997 |
| | | | JP | 8206585 A | 13-08-1996 |
| | | | US | 5928730 A | 27-07-1999 |
| EP 765922 | A | 02-04-1997 | BR | 9603928 A | 09-06-1998 |
| | | | CA | 2186776 A1 | 28-03-1998 |
| | | | EP | 0765922 A1 | 02-04-1997 |
| | | | JP | 9221631 A | 26-08-1997 |
| WO 9948928 | A | 30-09-1999 | JP | 11124403 A | 11-05-1999 |
| | | | JP | 11124404 A | 11-05-1999 |
| | | | JP | 11292874 A | 26-10-1999 |
| | | | JP | 11302278 A | 02-11-1999 |
| | | | AU | 1586499 A | 18-10-1999 |
| | | | EP | 0878482 A1 | 18-11-1998 |
| | | | EP | 1073685 A1 | 07-02-2001 |
| | | | US | 6410611 B1 | 25-06-2002 |
| | | | WO | 9948928 A1 | 30-09-1999 |
| WO 0031197 | A | 02-06-2000 | US | 6251973 B1 | 26-06-2001 |
| | | | AU | 3034700 A | 13-06-2000 |
| | | | BR | 9915594 A | 07-08-2001 |
| | | | CN | 1332776 T | 23-01-2002 |
| | | | WO | 0031197 A1 | 02-06-2000 |
| | | | EP | 1137732 A1 | 04-10-2001 |
| | | | US | 2002115763 A1 | 22-08-2002 |
| GB 933196 | A | 08-08-1963 | DE | 1133129 B | 12-07-1962 |
| EP 219046 | A | 22-04-1987 | DE | 3536262 A1 | 16-04-1987 |
| | | | AT | 71389 T | 15-01-1992 |
| | | | DE | 3683340 D1 | 20-02-1992 |
| | | | EP | 0219046 A2 | 22-04-1987 |
| | | | ES | 2027949 T3 | 01-07-1992 |
| | | | US | 4769410 A | 06-09-1988 |
| EP 331052 | A | 06-09-1989 | IT | 1216757 B | 08-03-1990 |
| | | | BR | 8900819 A | 17-10-1989 |
| | | | CA | 1333121 A1 | 15-11-1994 |
| | | | EP | 0331052 A2 | 06-09-1989 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 02 01 1631

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2002

| Patent document cited in search report | | Publication date | Patent family member(s) | | Publication date |
|---|---|---|---|---|---|
| EP 331052 | A | | JP | 1289807 A | 21-11-1989 |
| JP 1242569 | A | 27-09-1989 | NONE | | |
| JP 56053119 | A | 12-05-1981 | JP | 1357095 C | 13-01-1987 |
| | | | JP | 61021490 B | 27-05-1986 |
| EP 464454 | A | 08-01-1992 | JP | 2652459 B2 | 10-09-1997 |
| | | | JP | 4053802 A | 21-02-1992 |
| | | | DE | 69103696 D1 | 06-10-1994 |
| | | | DE | 69103696 T2 | 22-12-1994 |
| | | | EP | 0464454 A2 | 08-01-1992 |
| | | | US | 5332854 A | 26-07-1994 |
| JP 9169818 | A | 30-06-1997 | JP | 3212857 B2 | 25-09-2001 |
| JP 4214747 | A | 05-08-1992 | JP | 2925747 B2 | 28-07-1999 |

EPO FORM P0459

For more details about this annex : see Official Journal of the European Patent Office, No. 12/82